(19)

**Europäisches Patentamt**
**European Patent Office**
**Office européen des brevets**

(11) **EP 4 621 585 A1**

(12) **EUROPEAN PATENT APPLICATION**

(43) Date of publication:
24.09.2025   Bulletin 2025/39

(21) Application number: 25165347.3

(22) Date of filing: 21.03.2025

(51) International Patent Classification (IPC):
*G06F 13/40* (2006.01)       *G06F 13/42* (2006.01)

(52) Cooperative Patent Classification (CPC):
G06F 13/4273; G06F 13/4009

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.03.2024   US 202463568755 P
20.03.2025   US 202519085649

(71) Applicant: Samsung Electronics Co., Ltd.
Suwon-si, Gyeonggi-do 16677 (KR)

(72) Inventors:
• YANG, Li
San Jose, CA 95134 (US)
• YAO, Chih-Wei
San Jose, CA 95134 (US)
• QUACH, Nhon
San Jose, CA 95134 (US)
• YEE, Kevin
San Jose, CA 95134 (US)

(74) Representative: Kuhnen & Wacker
Patent- und Rechtsanwaltsbüro PartG mbB
Prinz-Ludwig-Straße 40A
85354 Freising (DE)

(54) **METHOD AND DEVICE FOR MAPPING OF HIGH BANDWIDTH MEMORY BASE DIE**

(57)     Methods and devices are provided in which a link layer module (506) of a base die in a chiplet receives signals in a memory controller, MC, interface format from MCs (502, 504) of the base die. The signals correspond to memory channels in the chiplet. The link layer module (506) converts the signals into a signal in a die-to-die, D2D, packet format based on a mapping ratio between the MCs (502, 504) and the link layer module (506). The link layer module (506) sends the signal in the D2D packet format to a D2D module of the base die. The chiplet is disposed on an interface or substrate of a superchip.

FIG. 5

EP 4 621 585 A1

**Description**

TECHNICAL FIELD

The disclosure generally relates to interfaces and adaptors of a logic die. More particularly, the subject matter disclosed herein relates to mapping logic for a high bandwidth memory base die.

SUMMARY

Recent advances in artificial intelligence (AI) hardware accelerators have highlighted the growing demand for high-bandwidth memory (HBM) in order to support data-intensive computations. HBM is preferred over traditional memory architectures due to its high dynamic random-access memory (DRAM) bandwidth (BW), which enables faster data transfer rates. With the evolution of HBM technology, such as HBM4, the total BW in a system is constrained by the number of HBM dies that can be integrated with a superchip. This limitation arises primarily due to the edge size (e.g., beachfront) of a system-on-chip (SoC) compute die, which dictates the number of HBM interfaces that can be accommodated. As future superchips require ever-increasing BW, overcoming these integration challenges is critical.

To solve this problem, die-to-die (D2D) interconnects have been proposed to extend the beachfront of the superchip. By leveraging D2D connectivity, additional HBM chiplets can be linked to the compute die, effectively expanding the available BW.

One issue with the above approach relates to scalability for high BW requirements and the ability to adapt to different speeds while maintaining low cost and power efficiency. These constraints limit the feasibility of deploying HBM chiplets in a cost-effective and power-efficient manner, particularly as AI workloads demand increasingly higher memory BW.

To overcome these issues, systems and methods are described herein for a modular link layer design that facilitates efficient scaling and adaptation to different BW and speed requirements. The link layer implementation employs a uniform data mapping and conversion approach across all channels, and utilizes fixed-size packet containers and a standardized format instead of stream-based transfer methods.

The above approach provides a scalable and power-efficient solution for integrating HBM chiplets with AI accelerators. The modular nature of the link layer simplifies implementation, making it easier to expand BW as needed. Additionally, the use of fixed-size packet containers ensures greater adaptability to different speeds, reducing the need for custom logic for each configuration. This approach results in lower power consumption, reduced area requirements, and enhanced cost-effectiveness, making it a highly efficient solution for next-generation AI hardware accelerators.

In an embodiment, a method is provided in which a link layer module of a base die in a chiplet receives signals in a memory controller (MC) interface format from MCs of the base die. The signals correspond to memory channels in the chiplet. The link layer module maps the signals to a signal in a D2D packet format based on a mapping ratio between the MCs and the link layer module. The link layer module sends the signal in the D2D packet format to a D2D module of the base die. The chiplet is disposed on an interface or substrate of a superchip.

In an embodiment, a base die of a chiplet is provided that includes MCs, a D2D module, and a link layer module. The link layer module is configured to receive signals in an MC interface format from the MCs. The signals correspond to memory channels in the chiplet. The link layer module is also configured to map the signals to a signal in a D2D packet format based on a mapping ratio between the MCs and the link layer module, and send the signal in the D2D packet format to the D2D module.

In an embodiment, an electronic device is provided that includes a processor and a non-transitory computer readable storage medium storing instructions. When executed, the instructions cause the processor to receive, at a link layer module of a base die in a chiplet, signals in an MC interface format from MCs of the base die. The signals correspond to memory channels in the chiplet. The instructions also cause the processor to map, by the link layer module, the signals to a signal in a D2D packet format based on a mapping ratio between the MCs and the link layer module. The instructions further cause the processor to send the signal in the D2D packet format from the link layer module, to a D2D module of the base die.

BRIEF DESCRIPTION OF THE DRAWING

In the following section, the aspects of the subject matter disclosed herein will be described with reference to exemplary embodiments illustrated in the figures, in which:

FIG. 1 is a diagram illustrating an electronic device, according to an embodiment;
FIG. 2 is a diagram illustrating a superchip architecture, according to an embodiment;
FIG. 3 is a diagram illustrating an HBM chiplet and a compute chiplet, according to an embodiment;

FIG. 4 is a diagram illustrating a modular link layer in an HBM4 base die with a two-to-one mapping ratio, according to an embodiment;

FIG. 5 is a diagram illustrating data format conversion and packing at each stage of a link layer module in the HBM base die, according to an embodiment;

FIG. 6 is a flowchart illustrating a method for mapping HBM channels to a D2D module, according to an embodiment; and

FIG. 7 is a block diagram of an electronic device in a network environment, according to an embodiment.

DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

An electronic device, according to one embodiment, may be one of various types of electronic devices utilizing storage devices (e.g., memory devices). The electronic device may use any suitable storage standard, such as, for example, peripheral component interconnect express (PCIe), nonvolatile memory express (NVMe), NVMe-over-fabric (NVMeoF), advanced extensible interface (AXI), ultra path interconnect (UPI), ethernet, transmission control protocol/Internet protocol (TCP/IP), remote direct memory access (RDMA), RDMA over converged ethernet (ROCE), fibre channel (FC), infiniband (IB), serial advanced technology attachment (SATA), small computer systems interface (SCSI), serial attached SCSI (SAS), Internet wide-area RDMA protocol (iWARP), and/or the like, or any combination thereof. In some embodiments, an interconnect interface may be implemented with one or more memory semantic and/or memory coherent interfaces and/or protocols including one or more compute express link (CXL) protocols such as CXL.mem, CXL.io, and/or CXL.cache, Gen-Z, coherent accelerator processor interface (CAPI), cache coherent interconnect for accelerators (CCIX), and/or the like, or any combination thereof. Any of the memory devices may be implemented with one or more of any type of memory device interface including double data rate (DDR), DDR2, DDR3, DDR4, DDR5, low-power DDR (LPDDRX), open memory interface (OMI), Nvlink high bandwidth memory (HBM), HBM2, HBM3, and/or the like. The electronic devices may include, for example, a portable communication device (*e.g.,* a smart phone), a computer, a portable multimedia device, a portable medical device, a camera, a wearable device, or a home appliance. However, an electronic device is not limited to those described above.

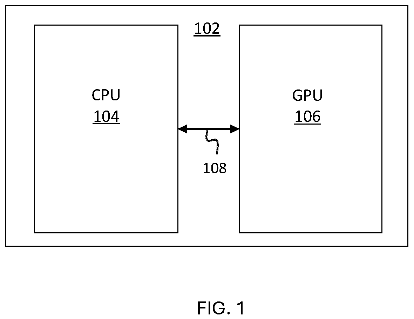

FIG. 1 is a diagram illustrating an electronic device, according to an embodiment. An electronic device (or user equipment (UE)) 102 may include multiple processing components that require efficient memory for management. The electronic device 102 may include a central processing unit (CPU) 104 and an accelerator, such as a graphics processing unit (GPU) 106, interconnected by a memory bus 108. These processing units rely on memory subsystems that must balance high-speed data access with low power consumption.

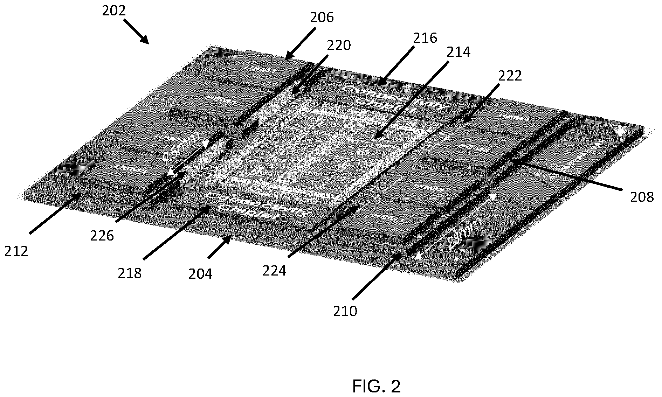

FIG. 2 is a diagram illustrating a superchip architecture, according to an embodiment. A superchip 202 of FIG. 2 may be utilized within an AI accelerator or the GPU 106 of the electronic device 102 of FIG. 1. The superchip 202 may include multiple dies disposed on an interposer 204 (e.g., silicon interposer) or a substrate. The multiple dies of the superchip 202 may include a first HBM chiplet 206, a second HBM chiplet 208, a third HBM chiplet 210, and a fourth HBM chiplet 212, each disposed on the interposer 204. Each of the first through fourth HBM chiplets 206, 208, 210, and 212 may include an HBM4 DRAM and an associated base die. While the superchip 202 of FIG. 2 is shown with a specific number of dies and in a specific configuration, embodiments are not limited to this number of dies or the configuration of die depicted.

The superchip 202 may also include a compute chiplet 214 (e.g., AI accelerator die) disposed on the interposer 204. The compute chiplet 214 may have dedicated first and second connectivity chiplets 216 and 218 disposed on opposing sides of the compute chiplet 214. The compute chiplet 214 may be connected to the HBM chiplets via D2D interconnects (e.g., universal chiplet interconnect express (UCIe) interconnects). Specifically, a first D2D interconnect 220 may connect the first HBM chiplet 206 to the compute chiplet 214. A second D2D interconnect 222 may connect the second HBM chiplet 208 to the compute chiplet 214. A third D2D interconnect 224 may connect the third HBM chiplet 210 to the compute chiplet 214. A fourth D2D interconnect 226 may connect the fourth HBM chiplet 212 to the compute chiplet 214. While the D2D interconnects are disposed at certain locations of the chiplets in FIG. 2, embodiments are not limited to these specific locations.

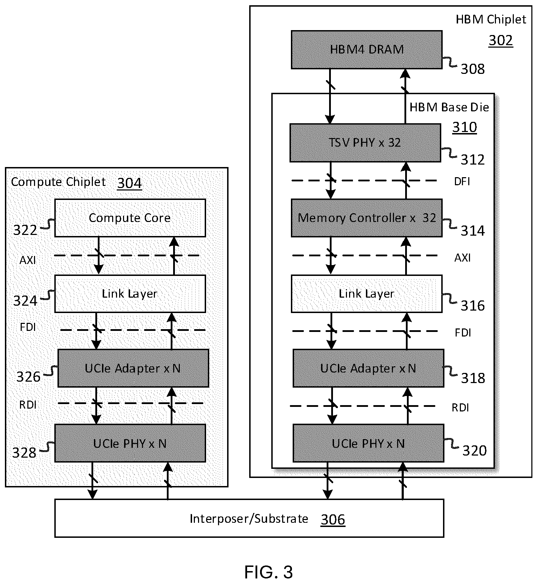

FIG. 3 is a diagram illustrating an HBM chiplet and a compute chiplet, according to an embodiment. Specifically, FIG. 3 is a detailed view of an HBM chiplet 302 and compute chiplet 304 on an interposer (or a substrate) 306.

The HBM chiplet 302 may correspond to one or more of the first HBM chiplet 206, the second HBM chiplet 208, the third HBM chiplet 210, and the fourth HBM chiplet 212 of FIG. 2. The HBM chiplet 302 may include an HBM4 DRAM 308 and an HBM base die 310 that are interconnected via through-silicon vias (TSVs) 312. While the embodiment of FIG. 3 is described with respect to HBM4, embodiments are not limited to this specific memory standard, and may be applicable to any high-performance memory standard.

The HBM base die 310 may include MCs 314 that supports multiple HBM4 channels (e.g., 32 channels), a link layer module 316 (e.g., mapping logic or an adapter), a D2D adapter (e.g., UCIe adapter) 318, and PHY layer module (e.g., UCIe PHY layer module) 320. While the embodiment of FIG. 3 is described with respect to 32 HBM channels, embodiments are not limited to this number of channels.

The TSVs 312 may communicate with the MCs 314 via a DDR-PHY interface (DFI). The link layer 316 may map a variety of bus protocols, such as AXI and proprietary protocols, from the MCs 314 to a D2D protocol. This mapping may enable the HBM chiplet 302 to interface seamlessly with any peer device (e.g., compute chiplets) using an identical link layer architecture. Specifically, the link layer module 316 may interface with the D2D adapter 318 through a flow control unit (FLIT)-aware D2D interface (FDI), and the D2D adapter 318 may interface with the PHY layer module 320 via a raw D2D interface (RDI). Additional circuitry may be provided to monitor and adjust signal integrity and timing across the TSVs to further improve reliability. While specific interfaces (e.g., DFI, AXI, FDI, RDI) are shown and described with respect to FIG. 3, embodiments are not limited to these interfaces between the noted modules of the HBM base die 310.

The compute chiplet 304 may correspond to the compute chiplet 214 of FIG. 2. The compute chiplet 304 may include a compute core 322, a link layer module 324, a D2D adapter (e.g., UCIe adapter) 326, and a PHY layer module (e.g., UCIe layer module) 328. Specifically, the link layer module 324 may support a variety of bus protocols such as AXI from the compute core 322, and may map these bus protocols to a D2D protocol. Specifically, the link layer module 324 may interface with the D2D adapter 326 via an FDI, and the D2D adapter 326 may interface with the PHY layer module 328 via an RDI.

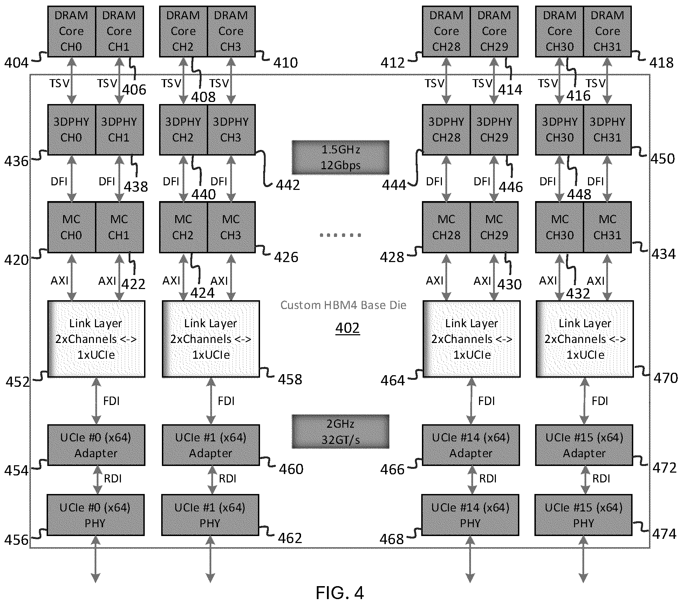

FIG. 4 is a diagram illustrating a modular link layer in an HBM4 base die with a two-to-one mapping ratio, according to an embodiment. While a two-to-one mapping ratio is shown and described with respect to FIG. 4, embodiments are not limited to this ratio. N HBM channels may be mapped to a single D2D module, and may be repeatedly instantiated and expanded to support multiple HBM channels transferred over multiple D2D modules.

An HBM4 base die 402 may correspond to the HBM base die 310 of FIG. 3. As described above, the HBM4 base die 402 may include MCs that support multiple HBM4 channels (e.g., 32 channels). Each HBM channel uses one MC. Additionally, as described above, while the embodiment of FIG. 4 is described with respect to 32 HBM channels, embodiments are not limited to this number of channels.

Accordingly, FIG. 4 illustrates 32 DRAM core channels (DRAM core channel-0 404, DRAM core channel-1 406, DRAM core channel-2 408, DRAM core channel-3 410, ..., DRAM core channel-28 412, DRAM core channel-29 414, DRAM core channel-30 416, and DRAM core channel-31 418) interconnected with corresponding 32 MC channels (MC channel-0 420, MC channel-1 422, MC channel-2 424, MC channel-3 426, ..., MC channel-28 428, MC channel-29 430, MC channel-30 432, and MC channel-31 434) via corresponding 32 TSVs (3DPHY channel-0 436, 3DPHY channel-1 438, 3DPHY channel-2 440, 3DPHY channel-3 442, ..., 3DPHY channel-28 444, 3DPHY channel-29 446, 3DPHY channel-30 448, and 3DPHY channel-31 450).

A modular link layer of the HBM4 base die 402 may map every two HBM channels to a single D2D (UCIe) module. For example, MC interface signals (e.g., AXI) from MC channel-0 420 and MC channel-1 422 may be received at a first link layer module 452, which may map to a signal provided to a first D2D adapter 454 via an FDI, and the first D2D adapter 454 may communicate with a first D2D PHY layer module 456 via an RDI. MC interface signals (e.g., AXI) from MC channel-2 424 and MC channel-3 426 may be received at a second link layer module 458, which may map to a signal provided to a second D2D adapter 460 via the FDI, and the second D2D adapter 460 may communicate with a second D2D PHY layer module 462 via the RDI. MC interface signals (e.g., AXI) from MC channel-28 428 and MC channel-29 430 may be received at a third link layer module 464, which may map to a signal provided to a third D2D adapter 466 via the FDI, and the third D2D adapter 466 may communicate with a third D2D PHY layer module 468 via the RDI. MC interface signals (e.g., AXI) from MC channel-30 432 and MC channel-31 434 may be received at a fourth link layer module 470, which may map to a signal provided to a fourth D2D adapter 472 via the FDI, and the fourth D2D adapter 472 may communicate with a fourth D2D PHY layer module 474 via the RDI.

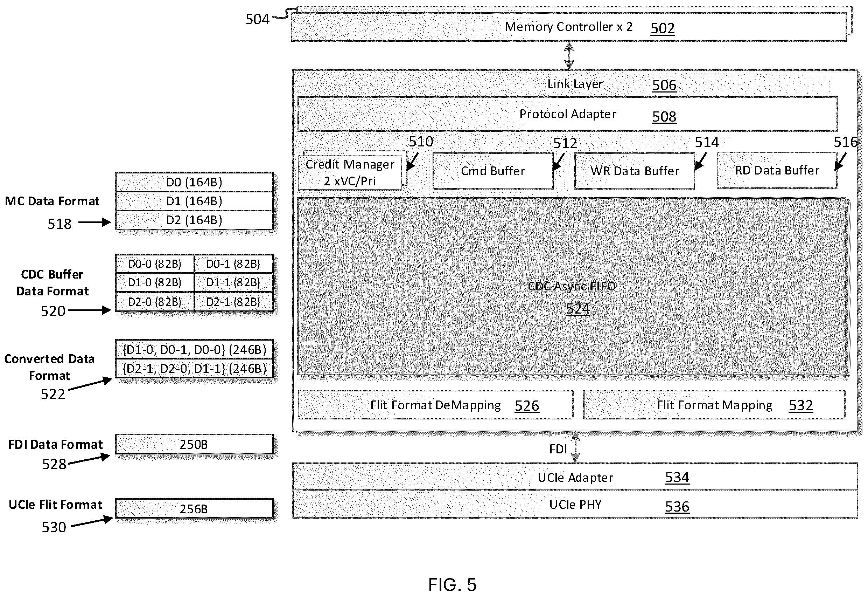

FIG. 5 is a diagram illustrating data format conversion and packing at each stage of a link layer module in the HBM base die, according to an embodiment. As described above with respect to FIG. 4, while a two-to-one mapping ratio is shown, embodiments are not limited to this ratio. N HBM channels may be mapped to a single D2D module, and may be repeatedly instantiated and expanded to support multiple HBM channels transferred over multiple D2D modules.

MCs 502 and 504 may correspond to any linked pair of MC channels in FIG. 4 (e.g., MC channel-0 420 and MC channel-1 422). Link layer module 506 may correspond to any link layer module of FIG. 4 (e.g., the first link layer module 452). MCs 502 and 504 may provide two MC interface signals (which may be based on AXI or other bus protocols) to the link layer module 506.

The link layer module 506 may include mapping logic that maps HBM channels to a single D2D (e.g., UCIe) module. This mapping logic may be implemented using modular blocks that can be instantiated repeatedly to accommodate various channel counts. The modular design not only simplifies scaling to support high bandwidth but also minimizes the required number of D2D modules, thereby reducing overall power consumption and silicon area. The mapping logic incorporates pipelined data conversion stages, ensuring that the transformation from HBM controller signals to D2D (e.g., UCIe) packet formats is efficient and low-latency.

The link layer module 506 may include a protocol adapter 508 that may optimize the MC interface signals received from the MCs 502 and 504, for transmission over the D2D interconnect, and may incorporate submodules dedicated to signal retiming, flow control, and error detection/correction. The flow control mechanism of the protocol adapter 508 may manage both control and data channels, ensuring that back pressure and buffering are appropriately handled during high-speed transfers. The protocol adapter 508 may include programmable delay elements and calibration circuits, which further refine timing margins between the HBM channels and the D2D interface. Such enhancements ensure optimal utilization of the D2D bandwidth while maintaining data integrity.

Accordingly, the protocol adapter 508 may work cooperatively with a credit manager 510, a command buffer 512, a write data buffer 514, and a read data buffer 516 of the link layer module 506 to pack the optimized MC interface signals into containers sized based on the MC data format. For example, for the two-to-one mapping of FIGS. 4 and 5, the optimized MC interface signals may be packed into 164B containers 518.

The link layer module 506 may also include a clock domain crossing (CDC) module 524 (e.g., CDC async first-in first-out (FIFO) module). The optimized MC interface signals, packed into sized containers, may each be subdivided into sub-containers based on a CDC buffer data format. For example, for the two-to-one mapping of FIGS. 4 and 5, the 164B containers 518 may each be subdivided into two 82B sub-containers 520.

The CDC FIFO module 524 may perform a CDC process by grouping the sub-containers and converting the grouped sub-containers into larger data units. For example, for the two-to-one mapping of FIGS. 4 and 5, the CDC FIFO module 524 may group six 82B sub-containers 520 and convert these grouped sub-containers into two 246B data units 522. The CDC FIFO module 524 may include logic for synchronizing disparate clock domains, with each FIFO entry designed to store data of a single sub-container 520. The CDC FIFO module 524 may be enhanced with error detection and correction features to safeguard against data corruption during high-speed transfers.

The link layer module 506 may also include a FLIT format de-mapping module 526 that may encapsulate the converted larger data units into an FDI format that is usable within a DCD FLIT format. For example, for the two-to-one mapping of FIGS. 4 and 5, each 246B data unit 522 may be encapsulated into a 250B usable field 528 of an FDI data format within a 256B UCIe FLIT 530 when using a UCIe FLIT format 6 streaming protocol for D2D transmission. The link layer module 506 may also include a FLIT format mapping module 532 that may apply a reverse process when data is transferred from UCIe to the MC.

The architecture, as illustrated in FIG. 4, may employ fixed data format sizes to adaptively support different HBM speed bins. Speed adaptation between HBM and UCIe may be managed in the CDC FIFO module 524 through a fixed data format conversion ratio of 2:3. The CDC FIFO module 524 may be configured such that, on the memory controller side, two entries are processed per cycle, whereas on the UCIe side, three entries are processed per cycle. The CDC FIFO module 524 may include programmable parameters (e.g., adjustable depth and clock synchronization margins) to enable fine-tuning for different operational environments. Each HBM speed bin may be associated with a matching UCIe speed grade, where the ratio of HBM speed to UCIe speed may be approximately 2:3, ensuring optimal performance and power efficiency, as shown in Table 1 below.

Table 1

| HBM Speed | UCIe Speed | Speed Ratio | MC Format | Conv Format | HBM Map Efficiency | UCIe Map Efficiency | UCIe BW Efficiency |
|---|---|---|---|---|---|---|---|
| 10.8Gbps | 32Gbps | 68% | 1648 | 2468 | 100% | 84% | 84% |
| 9.6Gbps | 24Gbps | 80% | 1648 | 246B | 96% | 96% | 92% |
| 8Gbps | 24Gbps | 67% | 164B | 246B | 100% | 83% | 83% |
| 6Gbps | 16Gbps | 75% | 164B | 246B | 100% | 94% | 94% |

For example, considering an HBM speed of 9.6 Gbps, the bandwidth for two HBM channels may be calculated as set forth in Equation (1) below:

$$1.2\text{GHz} \times 164\text{B} \times 98\% \text{ (to account for a 2\% container overhead)} = 192\text{GBps}.$$

$$\dots(1)$$

On the UCIe side, the corresponding bandwidth may be set forth in Equation (2) below:

$$0.75\text{GHz} \times 246\text{B} = 185\text{GBps}$$

$$\dots(2)$$

Due to the slightly lower UCIe-side bandwidth, the HBM bandwidth may be mapped at 96% efficiency (185GBps/192GBps). Additionally, the UCIe mapping is 96% efficient (246B/256B), resulting in an overall mapping efficiency of approximately 92%.

With respect to dynamic reconfiguration capabilities, the mapping logic and protocol adapter may be configured via firmware or hardware control registers to adjust the mapping ratio, FIFO depth, or protocol parameters in real time, based on workload demands or power-saving requirements. Such flexibility may allow various system architectures and performance targets to be tailored.

A comprehensive, scalable, and efficient solution may be provided interfacing HBM chiplets with high-performance compute dies via D2D interconnects. The modular design of the link layer, the detailed CDC FIFO implementation, and the adaptive speed matching techniques collectively ensure high bandwidth utilization, low power consumption, and robust data integrity, thereby addressing the challenges associated with integrating next-generation HBM in advanced AI hardware accelerators.

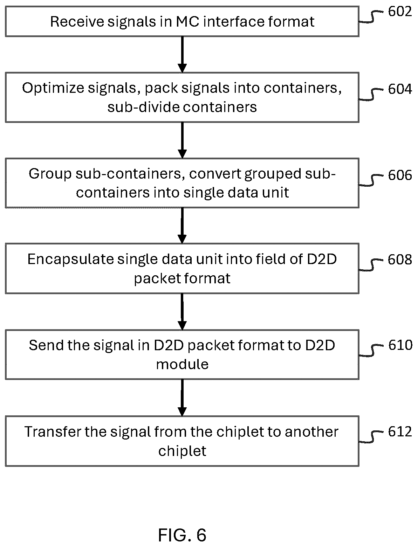

FIG. 6 is a flowchart illustrating a method for mapping HBM channels to a D2D module, according to an embodiment. At 602, a link layer module of a base die in a chiplet may receive signals in an MC interface format from MCs of the base die. The signals may correspond to HBM channels in the chiplet. The chiplet may be disposed on an interface or substrate of a superchip. The MCs may be subset of a plurality of MCs of the base die, and the link layer module may be one of a plurality of link layer modules of the base die.

The link layer module may map the signals to a signal in a D2D packet format based on a mapping ratio between the MCs and the link layer module. The D2D packet format may be a UCIe packet format. Specifically, at 604, a protocol adapter of the link layer module may optimize the signals for D2D transmission, pack the signals into containers sized based on the MC interface format, and subdivide the containers into sub-containers, based on a CDC buffer format. At 606, a CDC module of the link layer module may group the sub-containers and convert the grouped sub-containers into a single data unit. The CDC module may be embodied as a CDC FIFO module as described above with respect to FIG. 5. At 608, a format de-mapping module of the link layer module may encapsulate the single data unit into a field of the D2D packet format.

Converting the grouped sub-containers may include synchronizing disparate clock domains by the CDC module. Converting the grouped sub-containers may also include managing speed adaptation between the signals in the MC interface format and the signal in the D2D packet format through a format conversion ratio of 2:3. Control and data channels of the signals may be managed with respect to back pressure and buffering during high-speed transfers. At least one of the mapping ratio, a FIFO depth of the CDC module, or a parameter of the protocol adapter may be adjusted based on workload or power demands.

At 610, the link layer module may send the signal in the D2D packet format to a D2D module of the base die. The D2D module may be a UCIe module. At 612, the D2D module may transfer the signal from the chiplet to another chiplet of the superchip.

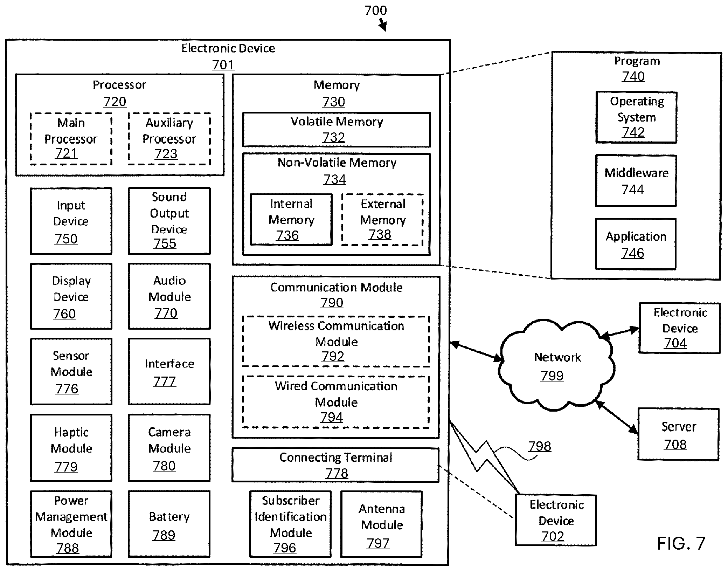

FIG. 7 is a block diagram of an electronic device in a network environment 700, according to an embodiment.

Referring to FIG. 7, an electronic device (or UE) 701 in a network environment 700 may communicate with an electronic device 702 via a first network 798 (e.g., a short-range wireless communication network), or an electronic device 704 or a server 708 via a second network 799 (e.g., a long-range wireless communication network). The electronic device 701 may communicate with the electronic device 704 via the server 708. The electronic device 701 may include a processor 720, a memory 730, an input device 750, a sound output device 755, a display device 760, an audio module 770, a sensor module 776, an interface 777, a haptic module 779, a camera module 780, a power management module 788, a battery 789, a communication module 790, a subscriber identification module (SIM) card 796, or an antenna module 797. In one embodiment, at least one (e.g., the display device 760 or the camera module 780) of the components may be omitted from the electronic device 701, or one or more other components may be added to the electronic device 701. Some of the components may be implemented as a single integrated circuit (IC). For example, the sensor module 776 (e.g., a fingerprint sensor, an iris sensor, or an illuminance sensor) may be embedded in the display device 760 (e.g., a display). The processor 720 may utilize the superchip, chiplet, and base die described above with respect to FIGS. 2-5.

The processor 720 may execute software (e.g., a program 740) to control at least one other component (e.g., a hardware or a software component) of the electronic device 701 coupled with the processor 720 and may perform various data processing or computations.

As at least part of the data processing or computations, the processor 720 may load a command or data received from another component (e.g., the sensor module 776 or the communication module 790) in volatile memory 732, process the command or the data stored in the volatile memory 732, and store resulting data in non-volatile memory 734. The processor 720 may include a main processor 721 (e.g., a CPU or an application processor (AP)), and an auxiliary processor 723 (e.g., a GPU, an image signal processor (ISP), a sensor hub processor, or a communication processor (CP)) that is operable independently from, or in conjunction with, the main processor 721. Additionally or alternatively, the auxiliary processor 723 may be adapted to consume less power than the main processor 721, or execute a particular function. The auxiliary processor 723 may be implemented as being separate from, or a part of, the main processor 721.

The auxiliary processor 723 may control at least some of the functions or states related to at least one component (e.g., the display device 760, the sensor module 776, or the communication module 790) among the components of the electronic device 701, instead of the main processor 721 while the main processor 721 is in an inactive (e.g., sleep) state, or together with the main processor 721 while the main processor 721 is in an active state (e.g., executing an application). The auxiliary processor 723 (e.g., an image signal processor or a communication processor) may be implemented as part of another component (e.g., the camera module 780 or the communication module 790) functionally related to the auxiliary processor 723. The auxiliary processor 723 may utilize the superchip, chiplet, and base die described above with respect to FIGS. 2-5.

The memory 730 may store various data used by at least one component (e.g., the processor 720 or the sensor module 776) of the electronic device 701. The various data may include, for example, software (e.g., the program 740) and input data or output data for a command related thereto. The memory 730 may include the volatile memory 732 or the non-volatile memory 734. Non-volatile memory 734 may include internal memory 736 and/or external memory 738.

The program 740 may be stored in the memory 730 as software, and may include, for example, an operating system (OS) 742, middleware 744, or an application 746.

The input device 750 may receive a command or data to be used by another component (e.g., the processor 720) of the electronic device 701, from the outside (e.g., a user) of the electronic device 701. The input device 750 may include, for example, a microphone, a mouse, or a keyboard.

The sound output device 755 may output sound signals to the outside of the electronic device 701. The sound output device 755 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 760 may visually provide information to the outside (e.g., a user) of the electronic device 701. The display device 760 may include, for example, a display, a hologram device, or a projector and control circuitry to control a corresponding one of the display, hologram device, and projector. The display device 760 may include touch circuitry adapted to detect a touch, or sensor circuitry (e.g., a pressure sensor) adapted to measure the intensity of force incurred by the touch.

The audio module 770 may convert a sound into an electrical signal and vice versa. The audio module 770 may obtain the sound via the input device 750 or output the sound via the sound output device 755 or a headphone of an external electronic device 702 directly (e.g., wired) or wirelessly coupled with the electronic device 701.

The sensor module 776 may detect an operational state (e.g., power or temperature) of the electronic device 701 or an environmental state (e.g., a state of a user) external to the electronic device 701, and then generate an electrical signal or data value corresponding to the detected state. The sensor module 776 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 777 may support one or more specified protocols to be used for the electronic device 701 to be coupled with the external electronic device 702 directly (e.g., wired) or wirelessly. The interface 777 may include, for example, a high- definition multimedia interface (HDMI), a universal serial bus (USB) interface, a secure digital (SD) card interface, or an audio interface.

A connecting terminal 778 may include a connector via which the electronic device 701 may be physically connected with the external electronic device 702. The connecting terminal 778 may include, for example, an HDMI connector, a USB connector, an SD card connector, or an audio connector (e.g., a headphone connector).

The haptic module 779 may convert an electrical signal into a mechanical stimulus (e.g., a vibration or a movement) or an electrical stimulus which may be recognized by a user via tactile sensation or kinesthetic sensation. The haptic module 779 may include, for example, a motor, a piezoelectric element, or an electrical stimulator.

The camera module 780 may capture a still image or moving images. The camera module 780 may include one or more lenses, image sensors, image signal processors, or flashes. The power management module 788 may manage power supplied to the electronic device 701. The power management module 788 may be implemented as at least part of, for example, a power management integrated circuit (PMIC).

The battery 789 may supply power to at least one component of the electronic device 701. The battery 789 may include, for example, a primary cell which is not rechargeable, a secondary cell which is rechargeable, or a fuel cell.

The communication module 790 may support establishing a direct (e.g., wired) communication channel or a wireless communication channel between the electronic device 701 and the external electronic device (e.g., the electronic device 702, the electronic device 704, or the server 708) and performing communication via the established communication channel. The communication module 790 may include one or more communication processors that are operable independently from the processor 720 (e.g., the AP) and supports a direct (e.g., wired) communication or a wireless communication. The communication module 790 may include a wireless communication module 792 (e.g., a cellular communication module, a short-range wireless communication module, or a global navigation satellite system (GNSS) communication module) or a wired communication module 794 (e.g., a local area network (LAN) communication module or a power line communication (PLC) module). A corresponding one of these communication modules may communicate with the external electronic device via the first network 798 (e.g., a short-range communication network, such as BLUETOOTH™, wireless-fidelity (Wi-Fi) direct, or a standard of the Infrared Data Association (IrDA)) or the second network 799 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 792 may identify and authenticate the electronic device 701 in a communication network, such as the first network 798 or the second network 799, using subscriber information (e.g., international mobile subscriber identity (IMSI)) stored in the subscriber identification module 796.

The antenna module 797 may transmit or receive a signal or power to or from the outside (e.g., the external electronic device) of the electronic device 701. The antenna module 797 may include one or more antennas, and, therefrom, at least one antenna appropriate for a communication scheme used in the communication network, such as the first network 798 or the second network 799, may be selected, for example, by the communication module 790 (e.g., the wireless communication module 792). The signal or the power may then be transmitted or received between the communication module 790 and the external electronic device via the selected at least one antenna.

Commands or data may be transmitted or received between the electronic device 701 and the external electronic device 704 via the server 708 coupled with the second network 799. Each of the electronic devices 702 and 704 may be a device of a same type as, or a different type, from the electronic device 701. All or some of operations to be executed at the electronic device 701 may be executed at one or more of the external electronic devices 702, 704, or 708. For example, if the electronic device 701 should perform a function or a service automatically, or in response to a request from a user or another device, the electronic device 701, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 701. The electronic device 701 may provide the outcome, with or without further processing of the outcome, as at least part of a reply to the request. To that end, a cloud computing, distributed computing, or client-server computing technology may be used, for example.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

**Claims**

1. A method comprising:

   receiving (602), by a link layer module (316, 506) of a base die in a chiplet, signals in a memory controller, MC, interface format from MCs (314, 502, 504) of the base die, wherein the signals correspond to memory channels in the chiplet;

   mapping, by the link layer module (316, 506), the signals to a signal in a die-to-die, D2D, packet format based on a mapping ratio between the MCs (314, 502, 504) and the link layer module (316, 506); and

   sending (610) the signal in the D2D packet format from the link layer module (316, 506), to a D2D module of the base die,

   wherein the chiplet is disposed on an interface or substrate of a superchip (202).

2. The method of claim 1, further comprising transferring (612), via the D2D module, the signal from the chiplet to another chiplet of the superchip.

3. The method of claim 1 or 2, wherein the MCs (314, 502, 504) are a subset of a plurality of MCs of the base die, and the link layer module (316, 506) is one of a plurality of link layer modules of the base die.

4. The method of any one of claims 1 to 3, wherein the D2D packet format comprises a universal chiplet interconnect express, UCIe, packet format, and the D2D module comprises a UCIe module.

5. The method of any one of claims 1 to 4, wherein mapping the signals comprises:

   optimizing (604) the signals for D2D transmission by a protocol adapter (508) of the link layer module (316, 506);

   packing (604), by the protocol adapter (508), the signals into containers (518) sized based on the MC interface format;

   subdividing (604), by the protocol adapter (508), the containers (518) into sub-containers (520) based on a clock domain crossing, CDC, buffer format; and

   grouping (606), by a CDC module (524) of the link layer module (316, 506), the sub-containers (520) and converting the grouped sub-containers (520) into a single data unit (522); and

   encapsulating (608), by a format de-mapping module of the link layer module (316, 506), the single data unit (522) into a field (528) of the D2D packet format.

6. The method of claim 5, wherein the CDC module (524) comprises a CDC first in-first out, FIFO, module comprising FIFO entries for sub-containers (520).

7. The method of claim 5 or 6, wherein converting (604) the grouped sub-containers (520) comprises synchronizing disparate clock domains by the CDC module (524).

8. The method of any one of claims 5 to 7, wherein converting (606) the grouped sub-containers (520) comprises managing, by the CDC module (524), speed adaptation between the signals in the MC interface format and the signal in the D2D packet format through a format conversion ratio.

9. The method of any one of claims 5 to 8, further comprising:
   managing, by the protocol adapter (508), control and data channels of the signals with respect to back pressure and buffering during high-speed transfers.

10. The method of any one of claims 5 to 9, further comprising:
    adjusting, by the link layer module (316, 506), at least one of the mapping ratio, a FIFO depth of the CDC module (524), or a parameter of the protocol adapter (508) based on workload or power demands.

**11.** A base die of a chiplet comprising:

memory controllers, MCs (314, 502, 504);
a die-to-die, D2D, module; and
a link layer module (316, 506) configured to:

receive signals in an MC interface format from the MCs (314, 502, 504), wherein the signals correspond to memory channels in the chiplet;
map the signals to a signal in a D2D packet format based on a mapping ratio between the MCs (314, 502, 504) and the link layer module (316, 506); and
send the signal in the D2D packet format to the D2D module.

**12.** The base die of claim 11, wherein the D2D module is configured to transfer the signal from the chiplet (206, 208, 210, 212, 302) to another chiplet (214, 304) of a superchip (202).

**13.** The base die of claim 11 or 12, wherein the MCs (314, 502, 504) are a subset of a plurality of MCs of the base die, and the link layer module (316, 506) is one of a plurality of link layer modules of the base die.

**14.** The base die of any one of claims 11 to 13, wherein, in mapping the signals, the link layer module (316, 506) is configured to:

optimize the signals for D2D transmission by a protocol adapter (508) of the link layer module (316, 506);
pack, by the protocol adapter (508), the signals into containers (518) sized based on the MC interface format;
subdivide, by the protocol adapter (508), the containers (518) into sub-containers (520) based on a clock domain crossing, CDC, buffer format; and
group, by a CDC module (524) of the link layer module (316, 506), the sub-containers (520) and converting the grouped sub-containers (520) into a single data unit (522); and
encapsulate, by a format de-mapping module of the link layer module (316, 506), the single data unit (522) into a field (528) of the D2D packet format.

**15.** The base die of claim 14, wherein the CDC module (524) comprises a CDC first in-first out, FIFO, module comprising FIFO entries for sub-containers.

FIG. 1

FIG. 2

HBM Chiplet 302

HBM4 DRAM 308

HBM Base Die 310

TSV PHY x 32 312

DFI

Memory Controller x 32 314

AXI

Link Layer 316

FDI

UCIe Adapter x N 318

RDI

UCIe PHY x N 320

Compute Chiplet 304

Compute Core 322

AXI

Link Layer 324

FDI

UCIe Adapter x N 326

RDI

UCIe PHY x N 328

Interposer/Substrate 306

FIG. 3

FIG. 4

FIG. 5

Memory Controller x 2  502

504

Link Layer  506

Protocol Adapter  508

Credit Manager 2 xVC/Pri  510

Cmd Buffer  512

WR Data Buffer  514

RD Data Buffer  516

CDC Async FIFO  524

Flit Format DeMapping  526

Flit Format Mapping  532

FDI

UCIe Adapter  534

UCIe PHY  536

MC Data Format  518
| D0 (164B) |
| D1 (164B) |
| D2 (164B) |

CDC Buffer Data Format  520
| D0-0 (82B) | D0-1 (82B) |
| D1-0 (82B) | D1-1 (82B) |
| D2-0 (82B) | D2-1 (82B) |

Converted Data Format  522
| {D1-0, D0-1, D0-0} (246B) |
| {D2-1, D2-0, D1-1} (246B) |

FDI Data Format  528
| 250B |

UCIe Flit Format  530
| 256B |

```
┌─────────────────────────────────────────┐
│     Receive signals in MC interface format    │─── 602
└─────────────────────────────────────────┘
                    │
                    ▼
┌─────────────────────────────────────────┐
│   Optimize signals, pack signals into containers,  │─── 604
│            sub-divide containers           │
└─────────────────────────────────────────┘
                    │
                    ▼
┌─────────────────────────────────────────┐
│     Group sub-containers, convert grouped sub-  │─── 606
│          containers into single data unit    │
└─────────────────────────────────────────┘
                    │
                    ▼
┌─────────────────────────────────────────┐
│   Encapsulate single data unit into field of D2D  │─── 608
│                packet format              │
└─────────────────────────────────────────┘
                    │
                    ▼
┌─────────────────────────────────────────┐
│    Send the signal in D2D packet format to D2D   │─── 610
│                  module                 │
└─────────────────────────────────────────┘
                    │
                    ▼
┌─────────────────────────────────────────┐
│   Transfer the signal from the chiplet to another  │─── 612
│                  chiplet                 │
└─────────────────────────────────────────┘
```

FIG. 6

FIG. 7

Europäisches
Patentamt

European
Patent Office

Office européen
des brevets

# EUROPEAN SEARCH REPORT

**Application Number**

EP 25 16 5347

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/129785 A1 (INTEL CORP [US]) 6 July 2023 (2023-07-06) | 1-4, 11-13 | INV. G06F13/40 G06F13/42 |
| A | * paragraph [0029] - paragraph [0096]; figures 1-10 * | 5-10,14, 15 | |
| A | US 2023/135934 A1 (TEH CHEE HAK [MY] ET AL) 4 May 2023 (2023-05-04) * paragraph [0024] - paragraph [0049]; figures 1-8 * | 1-15 | |
| A | US 2019/370211 A1 (MILLER GARY L [US] ET AL) 5 December 2019 (2019-12-05) * paragraph [0014] - paragraph [0022]; figures 1-3 * | 1-15 | |

**TECHNICAL FIELDS
SEARCHED    (IPC)**

G06F

The present search report has been drawn up for all claims

| Place of search | Date of completion of the search | Examiner |
|---|---|---|
| Munich | 28 July 2025 | Rudolph, Stefan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 16 5347

This annex lists the patent family members relating to the patent documents cited in the above-mentioned European search report.
The members are as contained in the European Patent Office EDP file on
The European Patent Office is in no way liable for these particulars which are merely given for the purpose of information.

28-07-2025

| Patent document cited in search report | Publication date | Patent family member(s) | Publication date |
|---|---|---|---|
| WO 2023129785 A1 | 06-07-2023 | EP 4457643 A1 | 06-11-2024 |
| | | KR 20240124186 A | 16-08-2024 |
| | | US 2022327084 A1 | 13-10-2022 |
| | | WO 2023129785 A1 | 06-07-2023 |
| US 2023135934 A1 | 04-05-2023 | CN 110858189 A | 03-03-2020 |
| | | CN 117235000 A | 15-12-2023 |
| | | DE 102019121523 A1 | 27-02-2020 |
| | | US 2019138493 A1 | 09-05-2019 |
| | | US 2023135934 A1 | 04-05-2023 |
| | | US 2024296140 A1 | 05-09-2024 |
| US 2019370211 A1 | 05-12-2019 | CN 110554926 A | 10-12-2019 |
| | | EP 3575973 A1 | 04-12-2019 |
| | | US 2019370211 A1 | 05-12-2019 |

EPO FORM P0459

For more details about this annex : see Official Journal of the European Patent Office, No. 12/82